# EUROPÄISCHE PATENTSCHRIFT

(11) **EP 1 529 335 B1**
(45) Veröffentlichungstag und Bekanntmachung des Hinweises auf die Patenterteilung: **10.10.2007**
(21) Anmeldenummer: 03787780.0
(22) Anmeldetag: 13.08.2003
(51) Int. Cl.: H02M 1/12, H02M 5/257, H02P 25/10

(54) **VORRICHTUNG ZUR LEISTUNGSSTEUERUNG DURCH PHASENANSCHNITT UND VERFAHREN ZUR VERRINGERUNG VON OBERWELLEN**
DEVICE FOR CONTROLLING POWER BY PHASE CONTROL, AND METHOD FOR REDUCING HARMONIC WAVES
DISPOSITIF DE REGULATION DE PUISSANCE COMMANDE A PHASE ET PROCEDE POUR REDUIRE LES ONDES HARMONIQUES

(30) Priorität: 14.08.2002 DE 10237983
(43) Veröffentlichungstag der Anmeldung: 11.05.2005
(73) Patentinhaber: Kurz, Gerhard, 75382 Althengstett (DE)
(72) Erfinder: SCHULZ, Detlef, 72657 Altenriet (DE)
(74) Vertreter: Lindner, Michael
(86) Internationale Anmeldenummer: PCT/EP2003/008966
(87) Internationale Veröffentlichungsnummer: WO 2004/017504

(56) Entgegenhaltungen:
- DE-A- 2 131 750
- DE-A- 4 305 882
- DE-A- 19 904 615

## Beschreibung

Die vorliegende Erfindung betrifft eine Vorrichtung zur Leistungssteuerung durch Phasenanschnitt einer einen elektrischen Verbraucher versorgenden Wechselspannung und zur Reduzierung von durch den Phasenanschnitt entstehenden Oberwellen bis zu einem Bereich von 4 kHz, vorzugsweise im Bereich der dritten harmonischen Oberwelle, mit einem in Reihe mit dem Verbraucher liegenden ersten Schaltungselement, das von einer Steuerungseinrichtung zur Ausführung eines Phasenanschnitts angesteuert wird. Die Erfindung betrifft ferner ein Verfahren zur Verringerung von Oberwellen im Bereich bis 4 kHz, vorzugsweise im Bereich der dritten harmonischen Oberwelle, bei einer Leistungssteuerung durch Phasenanschnitt.

Eine Vorrichtung und ein Verfahren zur Leistungssteuerung mittels Phasenanschnitt ist beispielsweise aus der Anmeldung DE 198 50 905 A1 der Anmelderin bekannt. Vorrichtungen zum Phasenanschnitt dienen dazu, die einem elektrischen Verbraucher zugeführte Leistung zu steuern, indem der Verbraucher über ein Schaltungselement periodisch ein- und ausgeschaltet wird. Üblicherweise wird als Schaltungselement ein TRIAC eingesetzt, das in Reihe mit dem Verbraucher liegt und über eine Steuerungseinrichtung gezündet wird. Die Steuerungseinrichtung umfaßt eine Reihenschaltung aus einem Widerstand und einem Zündkondensator, die parallel zum TRIAC angeordnet ist. Das Zündsignal wird zwischen dem Widerstand und dem Zündkondensator abgegriffen und über eine Reihenschaltung aus einem Widerstand und einem als DIAC ausgebildeten Zündelement dem Steuereingang (Gate) des TRIACS zugeführt. Neben diesen analog ausgeführten Steuerungseinrichtungen sind mittlerweile auch integrierte Schaltungen erhältlich, die diese Ansteuerungsfunktion erfüllen.

Bei der Leistungssteuerung durch Phasenanschnitt der dem Verbraucher zugeführten Wechselspannung entstehen unerwünschte Oberwellen, für die hinsichtlich ihrer Ausprägung europäische Normen bestehen. Diese Normen müssen von den Leistungssteuerungs-Vorrichtungen erfüllt werden, weshalb in den letzten Jahren Lösungen zur Verringerung dieser Oberwellen vorgeschlagen wurden.

DE 2131750 A1 offenbart eine Schaltungsanordnung zur Enstörung einer Phasenanschnittsteuerung eines wechselstromgespeisten Verbrauchers.

Bei der Reduzierung der Oberwellen spielt insbesondere die dritte harmonische Oberwelle eine besondere Rolle, weshalb sich bisherige Lösungen insbesondere auf die Reduzierung dieser dritten Harmonischen konzentriert haben. Ein Beispiel einer Vorrichtung zur Reduzierung der dritten harmonischen Oberwelle ist beispielsweise in EP 0 859 452 B1 der Anmelderin offenbart. Bei der darin gezeigten Lösung wird der Phasenwinkel bzw. Zündwinkel von der Steuerungseinrichtung um einen vorgegebenen Wert herum beispielsweise in aufeinanderfolgenden Vollwellen verändert. Das Ergebnis einer solchen Unsymmetrie im Zündwinkel führt zu nur langsam anwachsenden geradzahligen Harmonischen und stark reduzierten ungeradzahligen Harmonischen.

Obgleich sich dieser Lösungsweg in der Praxis durchaus bewährt hat und sich die bestehenden Normen hiermit ohne weiteres einhalten lassen, bleibt selbstverständlich weiterhin der Wunsch bestehen, eine noch kostengünstigere Lösung aufzufinden. Darüber hinaus wäre eine Vorrichtung wünschenswert, deren Brummen im Bereich von 25 Hz etwas geringer ist als bei der in der vorgenannten Druckschrift gezeigten Vorrichtung.

Vor diesem Hintergrund besteht die Aufgabe der vorliegenden Erfindung darin, eine Vorrichtung zur Leistungssteuerung durch Phasenanschnitt bereitzustellen, die kostengünstig herstellbar ist und darüber hinaus ein besseres Brummverhalten besitzt.

Diese Aufgabe wird bei der Vorrichtung der eingangs genannten Art dadurch gelöst, daß ein zweites Schaltungselement in Reihe mit einem Widerstandselement vorgesehen ist, wobei die Reihenschaltung parallel zu dem ersten Schaltungselement angeordnet liegt, und daß die Steuerungseinrichtung derart ausgebildet ist, daß sie das zweite Schaltungselement kurz vor dem ersten Schaltungselement ansteuert und für eine kurze Zeitdauer in den leitenden Zustand schaltet.

D.h. mit anderen Worten, daß durch das frühere Leitendschalten des zweiten Schaltungselements ein Strom fließt, der nach dem Zünden des eigentlichen ersten Schaltungselements von diesem übernommen wird. Bedingt durch das Widerstandselement ist der durch das zweite Schaltungselement fließende Strom geringer als jener durch das erste Schaltungselement. Insgesamt läßt sich mit Hilfe des zweiten Schaltungselements ein sanfterer Anstieg des Stroms insgesamt erreichen, so daß sich die harmonischen Oberwellen dadurch reduzieren. Insbesondere entstehen durch das Leitendschalten des zweiten Schaltungselements Oberwellen, die beim Zünden des ersten Schaltungselements auftretende Oberwellen teilweise auslöschen.

Aufgrund der wenigen zusätzlichen Bauteile, die für die erfindungsgemäße Vorrichtung zur Leistungssteuerung notwendig sind, lassen sich Herstellungskosten einsparen - ohne jedoch die Qualität hinsichtlich der Reduzierung von Oberwellen zu verschlechtern.

Allgemein liegt der Erfindung also der Gedanke zugrunde, vor dem eigentlichen Zündvorgang und dem Leitendschalten des TRIACS einen Strombetrag fließen zu lassen, der kleiner ist als der eigentliche durch das erste Schaltungselement fließende Nennstrom. Dadurch werden - wie erwähnt - weitere zeitlich früher entstehende Harmonische gebildet, die sich mit harmonischen Oberwellen bei der eigentlichen Phasenanschnittsteuerung zumindest teilweise auslöschen.

Bevorzugt wird als Schaltungselement ein TRIAC eingesetzt. Es ist weiter bevorzugt, das Widerstandselement als einfachen ohmschen Widerstand auszubilden. Selbstverständlich lassen sich auch andere Widerstandselemente verwenden, beispielsweise induktive oder kapazitive Widerstände. Es hat sich jedoch herausgestellt, daß gerade ohmsche Widerstände hinsichtlich ihrer Baugröße und der Kosten am besten geeignet sind.

Wie zuvor bereits ausgeführt, wird als mit einem Widerstand behaftete schaltbare Verbindung ein TRIAC eingesetzt, das in Reihe mit einem ohmschen Widerstand parallel zum ersten Schaltungselement liegt.

Die Erfindung sieht eine Vorrichtung gemäß Anspruch 1 vor.

Bevorzugte Ausgestaltungen sind in den abhängigen Ansprüchen definiert.

Die Erfindung wird nun anhand eines Ausführungsbeispiels mit Bezug auf die Zeichnung näher erläutert. Dabei zeigen:
- Fig. 1: ein schematisches Blockschaltdiagramm einer erfindungsgemäßen Vorrichtung zur Leistungssteuerung, und
- Fig. 2: ein Diagramm zur Verdeutlichung der Spannungs- bzw. Stromverläufe.

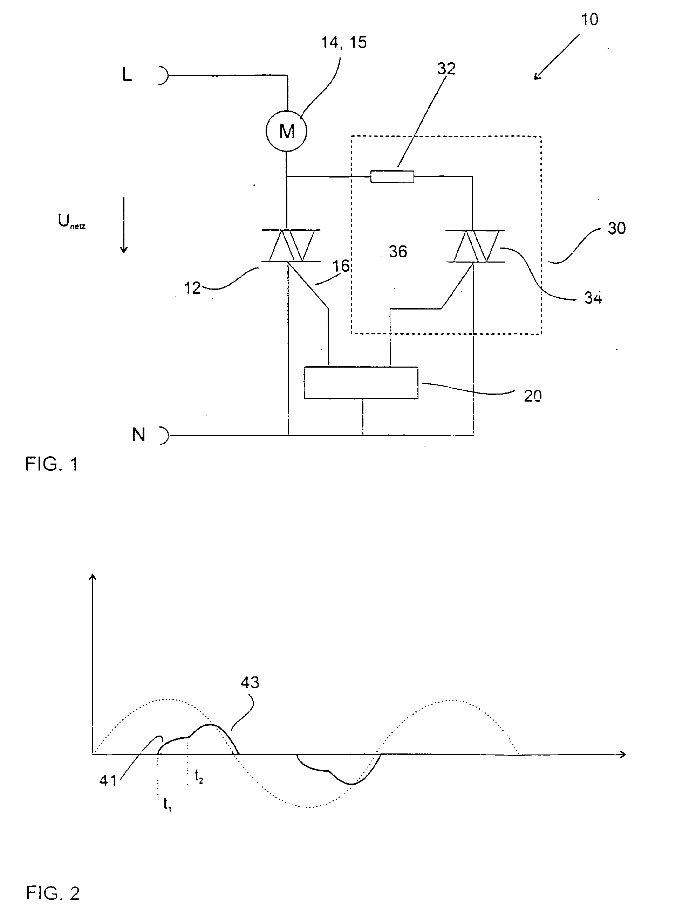

In Fig. 1 ist eine Vorrichtung zur Leistungssteuerung gezeigt und mit dem Bezugszeichen 10 gekennzeichnet. Die Leistungssteuerung erfolgt mittels des Phasenanschnitt-Verfahrens, das hinlänglich bekannt ist und an dieser Stelle nicht nochmals erläutert werden muß.

Zur Ausführung des Phasenanschnitts weist die Vorrichtung 10 einen TRIAC 12 auf, der in Reihe mit dem zu steuernden Verbraucher 14 angeordnet ist. Die Reihenschaltung aus TRIAC 12 und Verbraucher 14 wird von einem Wechselspannungs-Versorgungsnetz U_{netz} gespeist, wobei die beiden Pole mit L und N gekennzeichnet sind.

Bei dem Verbraucher 14 handelt es sich im vorliegenden Ausführungsbeispiel um einen Motor 15, der eine induktive Last darstellt.

Der TRIAC 12 ist über seinen Steuereingang (Gate) 16 mit einer Steuerungseinrichtung 20 verbunden, die der gewünschten Leistung entsprechende Zündimpulse erzeugt und dem Steueranschluß 16 zuführt.

Hinter dieser Steuerungseinrichtung 20 kann sich entweder ein diskret aufgebauter Schaltkreis verbergen, der beispielsweise einen Zündkondensator zur Erzeugung des Zündimpulses aufweist. Selbstverständlich kann die Steuerungseinrichtung auch als integrierte Schaltung ausgebildet sein.

Durch Abgabe eines Zündimpulses wird der TRIAC 12 leitend geschaltet, so daß der Verbraucher 14 mit Energie versorgt werden kann. Der TRIAC 12 bleibt bis zum Ende der Halbwelle der Versorgungsspannung leitend und geht dann in den nicht-leitenden Zustand über. Durch entsprechende Wahl des Zündzeitpunkts innerhalb einer Halbwelle der versorgungs spannung kann die Leistung gesteuert werden.

Bei dieser Art der Leistungssteuerung werden Oberwellen erzeugt, die zurück ins Wechselspannungs-Versorgungsnetz wirken. Aufgrund europäischer Normen dürfen diese Oberwellen jedoch bestimmte Beträge nicht überschreiten. Aufgrund dessen ist es notwendig, besondere Vorkehrungen zur Reduzierung dieser Oberwellen zu treffen.

Hierfür ist in der Vorrichtung 10 eine Schaltungseinheit 30 vorgesehen. Dieser Schaltungseinheit 30 kommt die Aufgabe zu, vor dem eigentlichen Zündzeitpunkt einen Strombetrag durch den Verbraucher 14 fließen zu lassen, der kleiner ist als der eigentliche Nennstrom. In Fig. 2 ist dieser Strombetrag mit dem Bezugszeichen 41 gekennzeichnet. Deutlich zu erkennen ist, daß dieser Strombetrag 41 vor dem eigentlichen nach der Zündung des TRIACS 12 fließenden Strom, der mit dem Bezugszeichen 43 gekennzeichnet ist, zu fließen beginnt. Die Zeitdifferenz zwischen dem Zeitpunkt t1 des kleineren Strombetrags 41 und dem Zeitpunkt t2 des Nennstroms 43 beträgt etwa 1-2 ms und kann, abhängig vom Zündwinkel, variieren. Insbesondere kann die Differenz bei sehr kleinen und/oder bei sehr großen Zündwinkeln auf Null gesetzt werden, was dazu führt, daß die Schaltungseinheit 30 wirkungslos bleibt.

Dadurch, daß ein kleiner Strombetrag 41 vor dem eigentlichen Nennstrom 43 fließt, entsteht ein Gesamtstrom durch den Verbraucher 14, dessen Anstieg damit deutlich abgeflacht wird. Diese Abflachung hat die Wirkung, daß die Entstehung von Oberwellen reduziert wird, insbesondere durch destruktive Interferenz der Oberwellen, die dem Strombetrag 41 und dem Nennstrom 43 zuzuordnen sind.

Insgesamt lassen sich durch diese Art der Steuerung gerade die niederen Oberwellen und hier insbesondere die dritte Harmonische reduzieren.

Die Funktion der Schaltungseinheit 30 wird im vorliegenden Ausführungsbeispiel von einer Reihenschaltung aus einem Widerstand 32 und einem TRIAC 34 erzielt, die parallel zu dem TRIAC 12 angeordnet sind. Folglich bildet sich bei leitendem TRIAC 34 ein Strompfad zwischen einem Pol der Versorgungsspannung über den Verbraucher 14, den Widerstand 32 und den TRIAC 34 zum zweiten Pol N. In diesem Fall wird der TRIAC 12 überbrückt.

Die Ansteuerung des TRIACS 34 erfolgt ebenfalls über die Steuerungseinrichtung 20, die Zündimpulse an den Steuereingang 36 (Gate) des TRIACS 34 liefert. Wie bereits erwähnt, wird dieser Zündimpuls zu einem Zeitpunkt t1 erzeugt, der vor dem Zeitpunkt t2 des eigentlichen an den TRIAC 12 gelieferten Zündimpulses liegt. Die entsprechende Differenz t2 - t1 kann beispielsweise fest vorgegeben sein oder kann von der Steuerungseinrichtung 20, abhängig von dem Zündwinkel des Zündimpulses, an den TRIAC 12 eingestellt werden.

Der in der Schaltungseinheit 30 vorgesehene Widerstand 32 ist vorzugsweise als ohmscher Widerstand ausgebildet und sorgt dafür, daß der Strom 41 nicht den Betrag des Nennstroms 43 erreicht. Ein Widerstand im Bereich von beispielsweise 10 Ohm hat sich als besonders günstig herausgestellt. Es versteht sich jedoch, daß die Begrenzung des Stroms 41 auch auf andere Art und Weise mit anderen Bauelementen erreicht werden kann.

Wie bereits erwähnt, wird der TRIAC 12 kurz vor seiner Zündung durch die Schaltungseinheit 30 überbrückt, so daß durch den Verbraucher 14 ein Strom fließen kann. Dieser Vorgang wiederholt sich periodisch in jeder Halbwelle der Versorgungsspannung.

Es hat sich gezeigt, daß mit einer sehr einfachen und kostengünstigen Schaltungseinheit 30 eine Reduzierung der Oberwellen möglich ist, so daß die geltenden Normen erfüllt werden können. Darüber hinaus wurde festgestellt, daß die bei bisherigen Schaltungseinheiten zur Reduzierung der Oberwellen entstehenden Brummgeräusche deutlich vermindert werden konnten.

## Patentansprüche

1. Vorrichtung zur Leistungssteuerung durch Phasenanschnitt einer einen elektrischen Verbraucher (14) versorgenden Wechselspannung und zur Reduzierung von durch den Phasenanschnitt entstehenden Oberwellen, insbesondere bis zu einem Bereich von 4 kHz, vorzugsweise im Bereich der dritten harmonischen Oberwelle, mit einem in Reihe mit dem Verbraucher (14) liegenden ersten Schaltungselement (12) (TRIAC), das von einer Steuerungseinrichtung (20) zur Ausführung des Phasenanschnitts angesteuert wird, wobei ein zweites Schaltungselement (34) in Reihe mit einem Widerstandselement (32) vorgesehen ist, und die Steuerungseinrichtung (20) derart ausgebildet ist, daß sie das zweite Schaltungselement (34) kurz vor dem ersten Schaltungselement (12) ansteuert und für eine kurze Zeitdauer in den leitenden Zustand schaltet **dadurch gekennzeichnet, daß** die Reihenschaltung aus zweiten Schaltungselement (34) und Widerstandselement (32) elektrisch parallel zu dem ersten Schaltungselement (12) angeordnet liegt.

2. Vorrichtung nach Anspruch 1, **dadurch gekennzeichnet, daß** das zweite Schaltungselement (34) ein Triac ist.

3. Vorrichtung nach Anspruch 1 oder 2, **dadurch gekennzeichnet, daß** das Widerstandselement (32) ein ohmscher Widerstand ist.

## Claims

1. Apparatus for controlling the power of an AC voltage supplying an electrical consumer (14) by phase control and for reducing harmonics caused by said phase control, particularly within a range of 4 kHz, preferably within a range of the third harmonic, comprising a first switching element (12) (TRIAC) connected in series with said consumer (14) and driven by a control device (20) for performing said phase control, wherein a second switching element (34) connected in series with a resistor element (32) is provided and said control device (20) is adapted such that it drives the second switching element (34) shortly before the first switching element (12) and switches it in its conducting state for a short time period, **characterized in that** the series connection of that second switching element (34) and the resistor element (32) is electrically parallel to the first switching element (12).

2. Apparatus of claim 1, **characterized in that** the second switching element (34) is a triac.

3. Apparatus of claim 1 or 2, **characterized in that** the resistor element (32) is an Ohmic resistor.

## Revendications

1. Dispositif de commande de la puissance par découpage de phase d'une tension alternative alimentant une charge (14) électrique et pour réduire les harmoniques produites par le découpage de phase, notamment jusqu'à une gamme de 4 kHz, de préférence dans la gamme de la troisième harmonique supérieure, comprenant un premier élément de commutation (12) (TRIAC) branché en série avec la charge (14), lequel élément est commandé par un dispositif de commande (20) pour réaliser le découpage de phase, un deuxième élément de commutation (24) étant prévu en série avec un élément résistif (32) et le dispositif de commande (20) étant configuré de telle sorte qu'il commande le deuxième élément de commutation (34) brièvement avant le premier élément de commutation (12) et le commute en l'état passant pendant une courte durée, **caractérisé en ce que** le circuit série composé du deuxième élément de commutation (34) et de l'élément résistif (32) est disposé électriquement en parallèle avec le premier élément de commutation (20).

2. Dispositif selon la revendication 1, **caractérisé en ce que** le deuxième élément de commutation (34) est un triac.

3. Dispositif selon la revendication 1 ou 2, **caractérisé en ce que** l'élément résistif (32) est une résistance ohmique.
